(19) **Europäisches Patentamt / European Patent Office / Office européen des brevets**

(11) **EP 4 675 546 A1**

(12) # EUROPEAN PATENT APPLICATION

(43) Date of publication:
07.01.2026 Bulletin 2026/02

(21) Application number: 25186128.2

(22) Date of filing: 30.06.2025

(51) International Patent Classification (IPC):
$G06T\ 1/20$ (2006.01) $\quad G06T\ 15/00$ (2011.01)

(52) Cooperative Patent Classification (CPC):
G06T 15/005; G06T 1/20; G06T 15/40;
G06T 2210/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.07.2024 GB 202409486

(71) Applicant: Imagination Technologies Limited
Kings Langley
Hertfordshire WD4 8LZ (GB)

(72) Inventor: de Lucas Casamayor, Enrique
Kings Langley, WD4 8LZ (GB)

(74) Representative: CMS Cameron McKenna Nabarro
Olswang LLP
Cannon Place
78 Cannon Street
London EC4N 6AF (GB)

(54) **CONSERVATIVE RASTERIZATION HARDWARE**

(57) A method of rendering primitives is described. Vertex coordinates are converted from floating-point to fixed-point format and triangle primitives having non-zero area prior to the conversion and zero area after the conversion and primitives that have changed from line primitives to point primitives as a consequence of the conversion are identified. A flag is set for each identified primitive and triangle or line primitives that have changed to point primitives as a consequence of the conversion are marked as small objects. Tile lists for each tile in the rendering space are then generated by: for any primitive that is not flagged as a degenerate primitive, using one or more edge calculations to determine whether the primitive overlaps a tile; and for any primitive that is both marked as a small object and flagged as a degenerate primitive, using a conservative bounding box to determine whether the primitive overlaps a tile.

FIG. 2B

204 — No ← POST-SNAPPED DEGENERATE PRIMITIVE? → Yes

206 — MARK PRIMITIVE AS A SMALL OBJECT AND SET DEGENERATE FLAG

**Description**

CROSS-REFERENCE TO RELATED APPLICATION

This application claims priority from UK patent application 2409486.4 filed on 1 July 2024, which is herein incorporated by reference in its entirety.

TECHNICAL FIELD

The invention relates to improved methods and hardware for implementing conservative rasterization within a GPU.

BACKGROUND

In computer graphics, a set of surfaces representing objects in a scene is divided up into a number of smaller and simpler pieces, (referred to as primitives), typically triangles, which are more amenable to rendering. The resulting divided surface is generally an approximation to the original surface, but the accuracy of this approximation can be improved by increasing the number of generated primitives, which in turn usually results in the primitives being smaller. The amount of subdivision is usually determined by a level of detail (LOD). An increased number of primitives is therefore typically used where a higher level of detail is required, e.g. because an object is closer to the viewer and/or the object has a more intricate shape. However, use of larger numbers of triangles increases the processing effort required to render the scene and hence increases the size of the hardware that performs the processing. Furthermore, as the average triangle size reduces, aliasing (e.g. when angled lines appear jagged) occurs more often and hence graphics processing systems employ anti-aliasing techniques which often involve taking several samples per pixel and subsequently filtering the data.

As the number of primitives that are generated increases, the ability of a graphics processing system to process the primitives becomes more important. One known way of improving the efficiency of a graphics processing system is to render an image in a tile-based manner. In this way, the rendering space into which primitives are to be rendered is divided into a plurality of tiles, which can then be rendered independently from each other. A tile-based graphics system includes a tiling unit to tile the primitives, i.e. to determine, for a primitive, which of the tiles of a rendering space the primitive is in. Then, when a rendering unit renders the tile, it can be given information (e.g. a per-tile list) indicating which primitives should be used to render the tile.

An alternative to tile-based rendering is immediate-mode rendering. In such systems there is no tiling unit generating per-tile lists and each primitive appears to be rendered immediately; however, even in such systems, the rendering space may still be divided into tiles of pixels and rendering of each primitive may still be done on a tile by tile basis with each pixel in a tile being processed before progressing to the next tile. This is done to improve locality of memory references.

Conservative rasterization is a rasterization technique which may be used with tile-based rendering instead of sample-based rasterization. Conservative rasterization is designed to handle quantization errors that are introduced by converting floating-point vertex coordinates to fixed point vertex coordinates. It is particularly useful for occlusion culling and collision detection as it correctly detects overlap of primitives irrespective of the resolution that is used. Conservative rasterization involves determining whether a square pixel area is fully overlapped by a primitive (this is referred to as 'inner coverage' or 'underestimate coverage'), partially overlapped by the primitive (this is referred to as 'outer coverage' or 'overestimate coverage') or not overlapped at all by the primitive. Conservative rasterization means that a pixel that is covered by any amount by a primitive is rasterized (even if there are no sample positions within the pixel that are covered by the primitive). This causes more pixels to be sent to the fragment shader (which may also be referred to as the pixel shader), as defined by the outer coverage, whereas inner coverage can be accessed by the shader to avoid sending higher precision values through the entire graphics pipeline within a GPU.

The embodiments described below are provided by way of example only and are not limiting of implementations which solve any or all of the disadvantages of known hardware that implements conservative rasterization.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of rendering primitives is described. Vertex coordinates are converted from floating-point to fixed-point format and triangle primitives having non-zero area prior to the conversion and zero area after the conversion and primitives that have changed from line primitives to point primitives as a consequence of the conversion are identified. A flag is set for each identified primitive and triangle or line primitives that have changed to point primitives as a consequence of the conversion are marked as small objects. Tile lists for each tile in the rendering space are then generated by: for any primitive that is not flagged as a degenerate primitive, using one or more edge calculations to determine whether the primitive overlaps a tile; and for any primitive that is both marked as a small object and flagged as a degenerate primitive, using a conservative bounding box to determine whether the primitive overlaps a tile.

A first aspect provides a method of operation of a graphics pipeline arranged to render primitives in a rendering space, wherein the rendering space is sub-divided into a plurality of tiles, the method comprising: converting vertex coordinates for a plurality of primitives from floating-point format to fixed point format; identifying (i) any triangle primitives having non-zero area prior to conversion of vertex coordinates and zero area after conversion of vertex coordinates and (ii) any primitives that have changed from line primitives to point primitives as a consequence of the conversion of vertex coordinates; setting a flag for each identified primitive, the flag identifying the primitive as a degenerate primitive and marking any triangle or line primitives that have changed to point primitives as a consequence of the conversion of the vertex coordinates as small objects; and generating tile lists for each tile by: for any primitive that is not flagged as a degenerate primitive, using one or more edge calculations to determine whether the primitive overlaps a tile; and for any primitive that is both marked as a small object and flagged as a degenerate primitive, using a conservative bounding box to determine whether the primitive overlaps a tile.

The method may further comprise, when setting a flag for each identified primitive, marking each identified primitive as a small object.

The method may further comprise, culling one or more primitives prior to converting the vertex coordinates, wherein primitives marked as small objects are not culled.

The method may further comprise, for any primitive that is flagged as a degenerate primitive, classifying the degenerate primitive as either a line-triangle or a point-triangle; and applying depth bias to each triangle primitive including the degenerate primitives.

The method may further comprise, for any primitive that is flagged as a degenerate primitive, using flat interpolation of varying data.

A second aspect provides a graphics pipeline arranged to render primitives in a rendering space, wherein the rendering space is sub-divided into a plurality of tiles, the graphics pipeline comprising: a clip unit arranged to convert vertex coordinates for a plurality of primitives from floating-point format to fixed point format; a vertex compression engine arranged to identify (i) any triangle primitives having non-zero area prior to conversion of vertex coordinates and zero area after conversion of vertex coordinates and (ii) any primitives that have changed from line primitives to point primitives as a consequence of the conversion of vertex coordinates, and to set a flag for each identified primitive, the flag identifying the primitive as a degenerate primitive and marking any triangle or line primitives that have changed to point primitives as a consequence of the conversion of the vertex coordinates as small objects; and a tiling engine arranged to generate tile lists for each tile by: for any primitive that is not flagged as a degenerate primitive, using one or more edge calculations to determine whether the primitive overlaps a tile; and for any primitive that is both marked as a small object and flagged as a degenerate primitive, using a conservative bounding box to determine whether the primitive overlaps a tile.

The tiling engine may be further arranged, when setting a flag for each identified primitive, to mark each identified primitive as a small object.

The graphics pipeline may further comprise: a cull unit arranged to cull one or more primitives prior to converting the vertex coordinates, wherein primitives marked as small objects are not culled by the cull unit.

The graphics pipeline may further comprise: an image synthesis processor floating point unit arranged: for any primitive that is flagged as a degenerate primitive, to classify the degenerate primitive as either a line-triangle or a point-triangle; and to apply depth bias to each triangle primitive including the degenerate primitives.

The graphics pipeline may further comprise: a texture and shading parameter floating point unit arranged, for any primitive that is flagged as a degenerate primitive, to use flat interpolation of varying data.

A third aspect provides a method of conservative rasterization in a graphics pipeline arranged to render primitives in a rendering space, wherein the rendering space is sub-divided into a plurality of tiles and each tile is sub-divided into a plurality of microtiles, the method comprising: generating tile lists for each tile by, for each primitive: for each edge, selecting a test point for the tile using a gradient of the edge and determining whether the test point is inside the edge by evaluating an equation for the edge using the coordinates of the test point, wherein either the edge equation or the test point is shifted by a distance equal to a first multiple of a quantization error introduced by conversion of vertex coordinates from floating-point format to fixed point format; and adding the primitive to the tile list for the tile in response to determining that, for each edge of the primitive, the test point is inside the edge and for each primitive in a tile list for a tile, determining whether a microtile is covered by a primitive by, for each primitive: for each edge, selecting a test point for the microtile using a gradient of the edge and determining whether the test point is inside the edge by evaluating an equation for the edge using the coordinates of the test point, wherein either the test point or the equation for the edge is shifted by a distance equal to a second multiple of the quantization error; and determining that the microtile is covered if, for each edge of the primitive, the test point is inside the edge.

The method may further comprise, receiving an enlarged bounding box for the primitive, wherein the bounding box has been enlarged using the quantization error, and wherein the determination of whether a microtile is covered by a primitive is performed for each microtile in the enlarged bounding box.

The method may further comprise, determining outer and inner pixel coverage for the primitive by, for each pixel in a pre-defined area, wherein the pre-defined area is defined by a bounding box around the primitive or the microtiles covered by the primitive: selecting a first test point for outer coverage and a second test point for inner coverage using a gradient of the edge and determining whether each test point is inside the edge by evaluating an equation for the edge using the coordinates of the test point, wherein the test points or the edge equation is shifted by an offset calculated using the quantization error, wherein different offsets are used for outer and inner coverage determinations; determining inner coverage of a pixel if, for each edge of the primitive, the second test point is on a right side of the edge; and determining outer coverage of a pixel if, for each edge of the primitive, the first test point is inside the edge.

The method may further comprise, determining whether the primitive is a degenerate primitive; and in response to determining that the primitive is a degenerate primitive, omitting the determination of inner coverage for all pixels.

The method may further comprise, in response to determining inner coverage of a pixel, adding the pixel to an inner coverage mask for the primitive; and in response to determining outer coverage of a pixel, adding the pixel to an outer coverage mask for the primitive.

A fourth aspect provides a graphics pipeline arranged to render primitives in a rendering space, wherein the rendering space is sub-divided into a plurality of tiles and each tile is sub-divided into a plurality of microtiles, the graphics pipeline comprising: a tiling engine arranged to: generate tile lists for each tile by, for each primitive: for each edge, selecting a test point for the tile using a gradient of the edge and determining whether the test point is inside the edge by evaluating an equation for the edge using the coordinates of the test point, wherein either the edge equation or the test point is shifted by a distance equal to a first multiple of a quantization error introduced by conversion of vertex coordinates from floating-point format to fixed point format; and adding the primitive to the tile list for the tile in response to determining that, for each edge of the primitive, the test point is inside the edge and a coefficient tracker arranged, for each primitive in a tile list for a tile, to determine whether a microtile is covered by a primitive by, for each primitive: for each edge, selecting a test point for the microtile using a gradient of the edge and determining whether the test point is inside the edge by evaluating an equation for the edge using the coordinates of the test point, wherein either the test point or the equation for the edge is shifted by a distance equal to a second multiple of the quantization error; and determining that the microtile is covered if, for each edge of the primitive, the test point is inside the edge.

The coefficient tracker may be further arranged to receive an enlarged bounding box for the primitive, wherein the bounding box has been enlarged using the quantization error, and wherein the determination of whether a microtile is covered by a primitive is performed for each microtile in the enlarged bounding box.

The graphics pipeline may further comprise, a microtile processor arranged to determine outer and inner pixel coverage for the primitive by, for each pixel in a pre-defined area, wherein the pre-defined area is defined by a bounding box around the primitive or the microtiles covered by the primitive: Selecting a first test point for outer coverage and a second test point for inner coverage using a gradient of the edge and determining whether each test point is inside the edge by evaluating an equation for the edge using the coordinates of the test point, wherein the test points or the edge equation is shifted by an offset calculated using the quantization error, wherein different offsets are used for outer and inner coverage determinations; Determining inner coverage of a pixel if, for each edge of the primitive, the second test point is on a right side of the edge; and Determining outer coverage of a pixel if, for each edge of the primitive, the first test point is inside the edge.

The microtile processor may be further arranged to: Determine whether the primitive is a degenerate primitive; and In response to determining that the primitive is a degenerate primitive, omit the determination of inner coverage for all pixels.

The microtile processor may be further arranged to: In response to determining inner coverage of a pixel, add the pixel to an inner coverage mask for the primitive; and In response to determining outer coverage of a pixel, add the pixel to an outer coverage mask for the primitive.

The graphics pipeline may be embodied in hardware on an integrated circuit. There may be provided a method of manufacturing, at an integrated circuit manufacturing system, a graphics pipeline. There may be provided an integrated circuit definition dataset that, when processed in an integrated circuit manufacturing system, configures the system to manufacture a graphics pipeline. There may be provided a non-transitory computer readable storage medium having stored thereon a computer readable description of a graphics pipeline that, when processed in an integrated circuit manufacturing system, causes the integrated circuit manufacturing system to manufacture an integrated circuit embodying a graphics pipeline.

There may be provided an integrated circuit manufacturing system comprising: a non-transitory computer readable storage medium having stored thereon a computer readable description of the graphics pipeline; a layout processing system configured to process the computer readable description so as to generate a circuit layout description of an integrated circuit embodying the graphics pipeline; and an integrated circuit generation system configured to manufacture the graphics pipeline according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 is a schematic diagram of an example graphics processing unit (GPU) pipeline;

Figures 2A, 2B, 2C and 2D show aspects of a first example method which improves the efficiency of performing conservative rasterization within a GPU;

Figures 2E and 2F show variations of Figures 2B and 2C respectively;

Figures 2G, 2H and 2I show further aspects of the first example method which improves the efficiency of performing conservative rasterization within a GPU;

Figures 3A and 3B show aspects of a second example method which improves the efficiency of performing conservative rasterization within a GPU;

Figure 4 shows a table of the test point that may be used for different edge orientations when performing tiling within a GPU;

Figure 5 shows the edges of a line primitive;

Figure 6 is a flow diagram showing a method of tiling that may be used when conservative rasterization is enabled;

Figure 7 is a flow diagram of an improved method of determining microtile coverage;

Figure 8 is a schematic diagram showing the test point that may be used for different edge orientations when determining microtile coverage according to the method of Figure 7;

Figure 9 shows the result of microtile coverage determination using a bounding box and using the method of Figure 7;

Figure 10 is a flow diagram of an improved method of determining outer and inner pixel coverage;

Figure 11 shows a computer system in which a graphics processing system is implemented; and

Figure 12 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

Described herein is hardware that performs conservative rasterization in a more efficient manner (e.g. in terms of power consumption and/or physical size). This hardware may be implemented within the geometry processing and/or rasterization phases of a graphics processing pipeline (e.g. within a graphics processing unit, GPU). In particular, although the calculation of inner and outer coverage is performed within the rasterization phase of a GPU, some of the methods described herein are implemented within the geometry processing phase, using data identifying that conservative rasterization will be performed in the rasterization phase for a particular primitive, and result in more efficient implementation of conservative rasterization within the GPU as a whole.

Conservative rasterization may be implemented on a per-draw call basis (and not a per-primitive basis) and so GPU hardware has to be able to handle both primitives with conservative rasterization enabled and primitives with conservative rasterization disabled. Additionally, there may be different conservative rasterization modes that may be used.

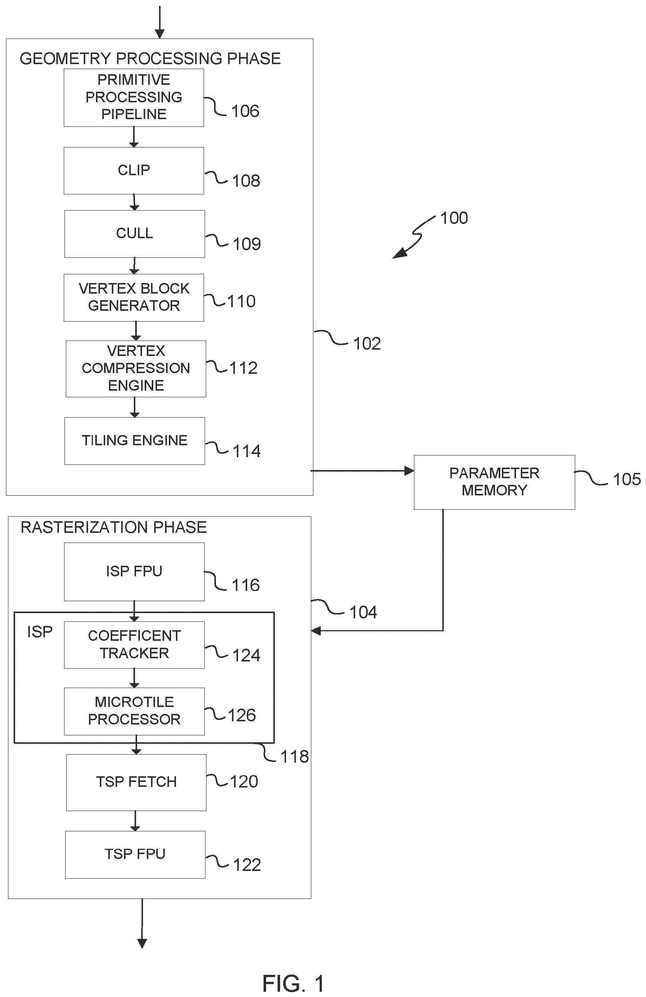

Figure 1 shows a schematic diagram of an example graphics processing unit (GPU) pipeline 100 which may be implemented in hardware within a GPU and which uses a tile-based rendering approach. The hardware described herein may also be used in a GPU that instead uses alternative rendering approaches where the rendering processes groups of pixels (e.g. where immediate mode rendering is used).

As shown in Figure 1, the pipeline 100 comprises a geometry processing phase 102 and a rasterization phase 104. The geometry processing phase 102 generates the primitive data and also per-tile display lists. Each per-tile display list identifies, for a particular tile, those primitives which are at least partially located within that tile. Data generated by the geometry processing phase 102 may pass directly to the rasterization phase 104 and/or some of the data may be written to memory (e.g. parameter memory 105) by the geometry processing phase 102 and then read from memory by the rasterization phase 104. The rasterization phase 104 renders some or all of the primitives generated by the geometry processing phase 101. The conservative rasterization mode that is being used for a draw call is passed along the pipeline (e.g. in the geometry state). There may, for example, be three different conservative rasterization modes: disabled, conservative overestimate (corresponding to outer coverage) and conservative underestimate (corresponding to inner coverage). If the conservative rasterization mode that is used is conservative underestimate, determination of the outer coverage can be omitted and the inner coverage is used as the sample mask (also referred to as the sample active mask). If the conservative rasterization mode that is used is conservative overestimate and inner coverage is requested, both inner and outer coverage need to be determined. The outer coverage is used as the sample mask and the inner coverage is an additional mask.

The geometry processing phase 101 shown in Figure 1 comprises a primitive processing pipeline (PPP) 106, a clip unit 108, a cull unit 109, a vertex block generator (VBG) 110, a vertex compression engine (VCE) 112 and a tiling engine (TE) 114. These are described in more detail below. The geometry processing phase 102 may also comprise other elements not shown in Figure 1.

The PPP 106 assembles primitives and the clip unit 108 identifies any primitives that lie on the boundary of the viewing region and divides them into several primitives along the boundary. The clip unit 108 transforms the coordinates of the vertices of the primitives from floating-point format into fixed point format. The cull unit 109 may cull one or more primitives according to pre-defined rules. For example, back-facing primitives (i.e. primitives facing away from the viewer) may be culled. Primitives that are culled are discarded and so are not rendered by the GPU pipeline 100. According to the methods described herein, the culling operation of the cull unit 109 is modified to improve the manner in which conservative rasterization is performed and this is described in more detail below. The PPP 106, clip unit 108 and cull unit 109 form part of the geometry front-end within the geometry processing phase 101.

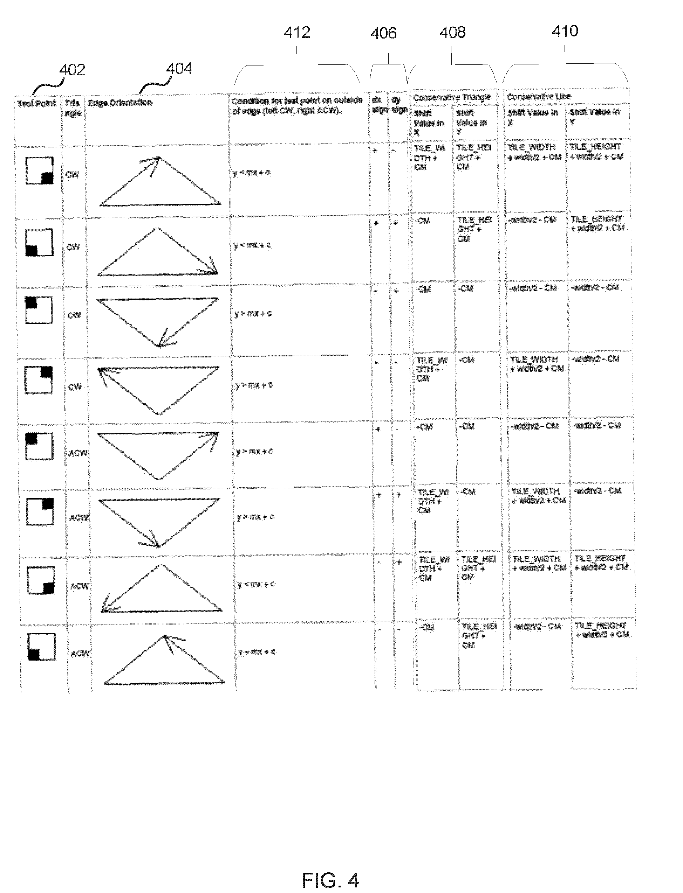

The VBG 110, VCE 112 and TE 114 form part of the geometry back-end within the geometry processing phase 101. The VBG 110 processes the primitives generated by the geometry front-end and copies the resulting primitive data into a buffer (not shown in Figure 1). The VCE 112 fetches the vertex data and varying data, combines vertices to form primitives, compresses the data and constructs the primitive blocks. The TE 114 receives 2D vertex data (x and y coordinates) from the VCE 112 and uses this data, along with a tiling algorithm, to generate the per-tile display lists described above. The TE 114 may use a technique referred to as 'perfect tiling' which is described in GB2401522 (e.g. in Figure 4 of that patent). Perfect tiling involves comparing the edge equations of a primitive with the integer tile boundaries to check if the corner of the tile is inside the primitive. In perfect tiling, there is no comparison of sample points and the assessment is performed at the corner of the tile boundaries. Other methods of tiling that may be used by the TE 114 are described in GB2549789. A further tiling method, which may be considered to be a variation of the perfect tiling method, is described below with reference to Figures 4-6.

The rasterization phase 104 comprises an image synthesis processor floating point unit (ISP FPU) 116, an image synthesis processor (ISP) 118, a texture and shading parameter (TSP) fetch unit 120 and a TSP floating point unit (TSP FPU) 122. The ISP 118 comprises a coefficient tracker (CT) 124 and a microtile processor 126. These are described in more detail below. The rasterization phase 104 may also comprise other elements not shown in Figure 1.

As described above, the rendering space is divided into a plurality of tiles (which may, for example, be square or rectangular) and each tile is further divided into a regular arrangement of smaller areas, referred to as 'microtiles'. Within each tile there is a pre-defined arrangement of microtiles and each of the microtiles may be the same size (i.e. each microtile comprises the same number, and arrangement of, of pixels).

The ISP 118 (and in particular the microtile processor 126) performs the tests for outer and inner pixel coverage as required for conservative rasterization and generates outer coverage and inner coverage masks. These masks show which pixels within a tile meet the outer and inner coverage tests and hence are generated for each of a plurality of primitives (e.g. each primitive on a per-tile display list) and indicate, for each pixel, whether the pixel (i.e. the square pixel area, rather than a single sample position within the pixel) is partially overlapped by the primitive (in the outer coverage mask) and/or fully overlapped by the primitive (in the inner coverage mask).

Described herein are methods and hardware that provide improved handling of post-snapped degenerate primitives and as a result provide improved hardware for the implementation of conservative rasterization. A degenerate primitive is a primitive that has zero area and a post-snapped degenerate primitive is either (i) a triangle primitive that has non-zero area prior to down-conversion of the primitive's vertex coordinates from floating point format to fixed point format (e.g. conversation from F32 to 16.8 fixed point coordinates) in the clip unit 108 and zero area after down-conversion (i.e. down-conversion changes it from a triangle primitive to a line or point) or (ii) a line primitive that has non-zero length prior to down-conversion and zero length after down-conversion (i.e. down-conversion changes it from a line to a point).

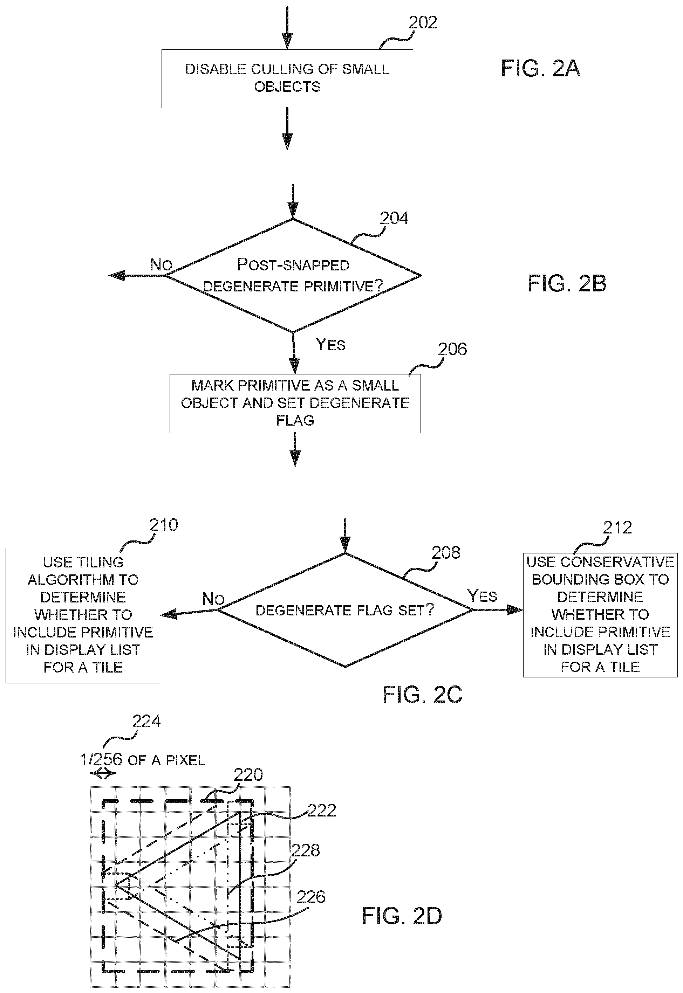

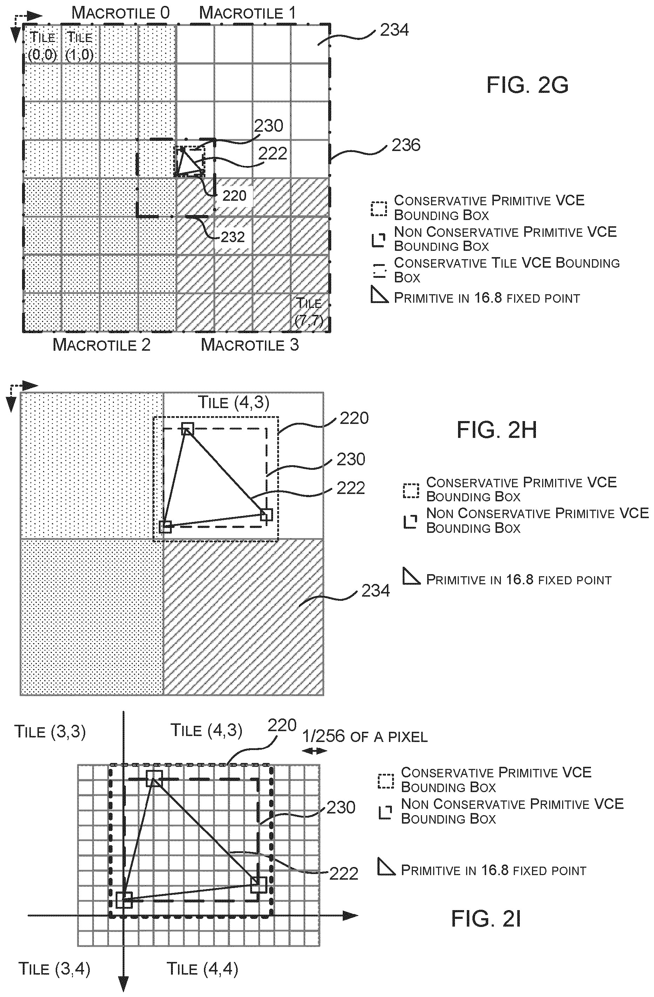

A first example method which improves the efficiency of conservative rasterization can be described with reference to Figures 2A-2C. This method is implemented within the geometry phase of a GPU, with the method of Figure 2A being performed by the cull unit 109, the method of Figure 2B being performed by the VCE 112 and the method of Figure 2C being performed by the TE 114.

The cull unit 109 may perform culling of primitives where conservative rasterization is not enabled (e.g. where standard sample-based rasterization is used). Where conservative rasterization is not enabled, the culling of primitives may include one or more of culling of those that are (i) entirely off the screen, (ii) those that are facing backwards, (iii) those that are classified as 'small objects' (i.e. those that have no samples in their bounding box or have no samples inside their triangle) and (iv) those that have zero area or two or more identical coordinates (i.e. degenerate primitives). The particular software configuration may determine which types of primitives are culled and which are not. Degenerate primitives are typically culled because the interpolation of varyings is not well-defined when the area of the primitive is zero. The term 'varyings' or 'varying data' refers to an attribute of a primitive vertex that varies across the primitive, such as texture coordinate or colour. Where conservative rasterization is enabled for a primitive, however, the culling operations of the cull unit 109 are modified. Primitives that have zero area after down-conversion of the coordinates (e.g. when the vertex coordinates are in floating point format) are not culled by the cull unit 109. Culling of small object primitives is disabled. Off-screen primitives and backward facing primitives (block 202) are handled as without conservative rasterization.

Whilst the cull unit 109 culls those primitives that are degenerate when conservative rasterization is not enabled, where conservative rasterization is enabled for a primitive (or for various conservative rasterization modes such as DirectX Tier 2 and Tier 3 and Vulkan) the cull unit 109 does not cull post-snapped degenerate primitives to ensure that conservative rasterization does not produce false negatives (e.g. in relation to outer and/or inner coverage). Instead, as shown in Figure 2B, such post-snapped degenerate primitives ('Yes' in block 204) are marked as 'small objects' by the VCE 112 and a degenerate flag is set for the primitive (block 206). In addition, these post-snapped degenerate primitives may be marked as back-facing (in block 206), which enables applications to subsequently filter them out if this is required.

The degenerate flag (as set in block 206) is then used by the TE 114 as shown in Figure 2C. The TE 114 uses two different tiling methods to determine whether a primitive should be included in a per-tile display list. If the degenerate flag is not set ('No' in block 208), then the standard tiling algorithm (e.g. perfect tiling or the variation thereof described below with reference to Figures 4-6) is used to determine whether to include a primitive in a display list for a tile (block 210). This is the tiling algorithm that is used if conservative rasterization is not enabled for a primitive and involves using one or more edge calculations to determine whether the primitive overlaps the tile. Where conservative rasterization is enabled, however, the test points or edge equations are modified to account for a conservative margin (as described below). If, however, the degenerate flag is set ('Yes' in block 208), a bounding box (e.g. an axis aligned bounding box, AABB) is used to determine whether to include the primitive in a display list for a tile (block 212). Consequently, a post-snapped degenerate primitive (as flagged in block 206) is included in a display list for a tile if a conservative bounding box for the post-snapped degenerate primitive overlaps the tile. This means that a post-snapped degenerate point (where all three post-snapped vertices are coincident) can touch up to four tiles and a post-snapped degenerate line can touch any number of tiles depending upon its length and orientation. A conservative bounding box 220 for a primitive 222 is one that has been enlarged to include the conservative margin 224 (as described below) as shown in Figure 2D. Also shown in Figure 2D are lines shown the primitive plus the uncertainty region (line 226) and the primitive minus the uncertainty region (line 228). The size of the uncertainty region, and hence the conservative margin, is defined by the maximum quantization error (as described below).

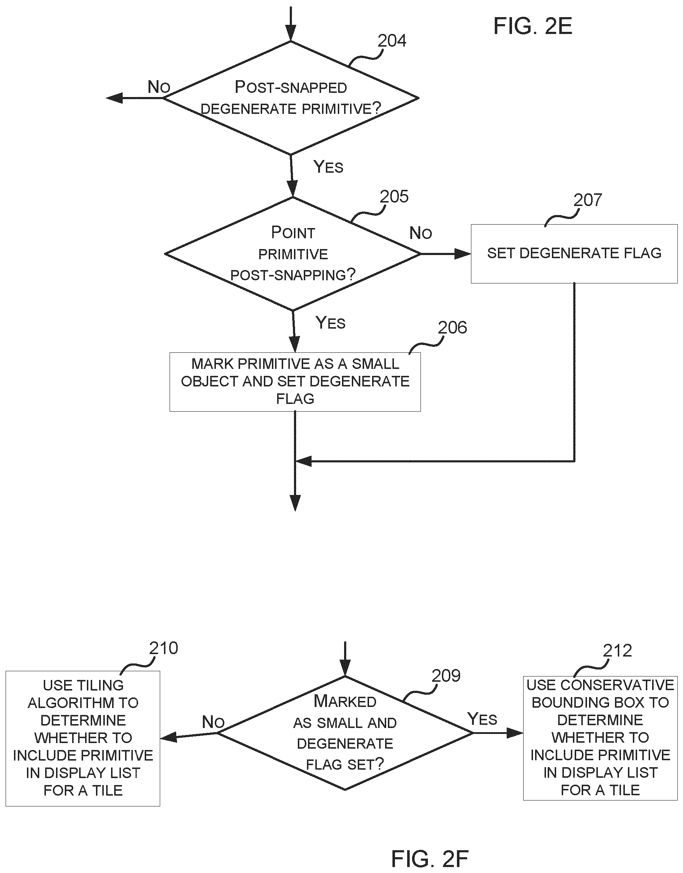

In a variation on that shown in Figures 2B and 2C and described above, instead of marking all post-snapped degenerate primitives as a small object (in Figure 2B), any post-snapped degenerate primitives that were triangle primitives with non-zero area prior to down-conversion and line primitives after down-conversion are not be marked as a small object, i.e. only those post-snapped degenerate primitives that are point primitives post-snapping ('Yes' in block 205) are marked as a small object (block 207), as shown in Figure 2E. Then when performing tiling (in Figure 2F, which is a variation of that shown in Figure 2C and described above), the conservative bounding box may be used (in block 212) for those primitives marked both as small and with the degenerate flag set ('Yes' in block 209). For those primitives with the degenerate flag set but which are not marked as small ('No' in block 209) i.e. those primitives that changed from a triangle to a line upon down-conversion) may be analysed using a tiling algorithm (in block 210). This increases the amount of processing that is performed but improves the overall accuracy of the tiling operation.

A further aspect of the first example method which improves the efficiency of conservative rasterization can be described with reference to Figures 2G-2I. The VCE 112 also generates a mask of which macrotiles each primitive is in, which may be referred to as the macrotile mask. A macrotile is an array of tiles 234, with each macrotile being the same size. In an example, each macrotile comprises an array of 4x4 tiles and the screen (i.e. the rendering space) is divided into 4x4 macrotiles. When generating this mask, the VCE 112 uses a macrotile bounding box 236. Figures 2G-2I show both the standard bounding box 230 and the conservative bounding box 220 for a primitive 222 at different levels of magnification. The standard bounding box 230 is defined at subpixel granularity, whereas the conservative bounding box 220 which is generated by the VCE 112, is larger than the standard bounding box 230 by an amount equal to the conservative margin on each side. In the example shown, the primitive bonding box 230 only overlaps tile (4,3) which is in macrotile 1, whereas the conservative bounding box 220 overlaps tiles (3,3), (3,4), (4,3) and (4,4), which are in macrotiles 0 to 3. The VCE 112 computes the tile bounding box 232 from the conservative bounding box 220, by expanding it to the nearest tile boundary in all directions. To compute the macrotile bounding box 236, from which the macrotile mask is generated, the VCE 112 expands the tile bounding box 232 to the nearest macrotile boundary in all directions. The macrotile mask is accumulated to form a primitive block based mask and this in turn is used in page closing operations.

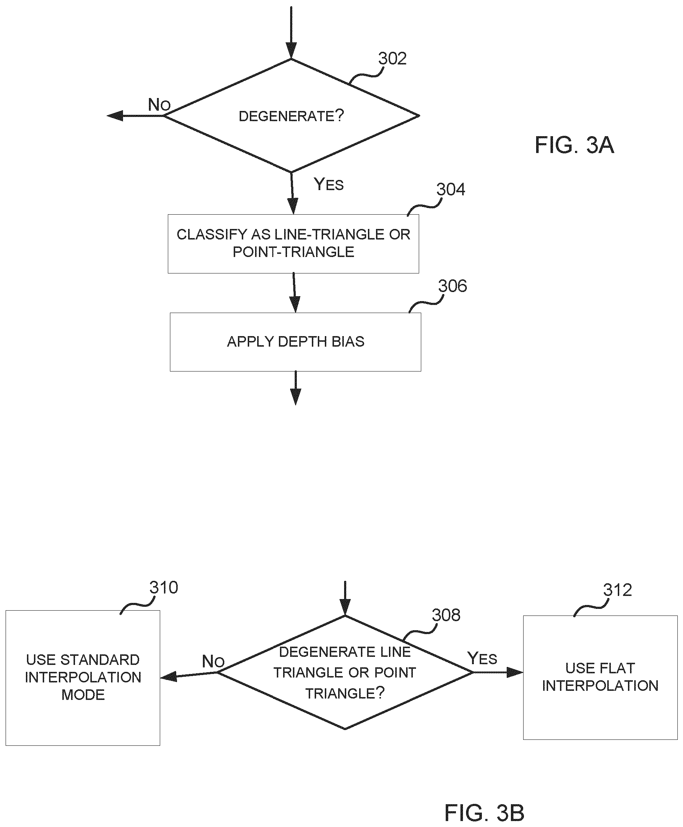

A second example method which improves the efficiency of conservative rasterization can be described with reference to Figures 3A and 3B. This method is implemented within the rasterization phase of a GPU, with the method of Figure 3A being performed by the ISP FPU 116 and the method of Figure 3B being performed by the TSP FPU 122.

The ISP FPU 116 detects degenerates (block 302, e.g. based on the degenerate flag described above) and for any primitives that are identified as degenerates ('Yes' in block 302), they are classified as either degenerate line-triangles or degenerate point-triangles (block 304). A primitive is classified as a degenerate line-triangle if, upon conversion from floating point to fixed point coordinates (also referred to down-conversion of the coordinates), the primitive changes from a triangle to a line (i.e. after conversion, at least two of the coordinates are different and all three coordinates are co-linear). A primitive is classified as a degenerate point-triangle if, upon conversion from floating point to fixed point coordinates (also referred to down-conversion of the coordinates), the primitive changes from a triangle or a line to a point (i.e. after conversion, all three vertices are identical). Degenerate line-triangles and degenerate point-triangles are two new object types and a primitive may be classified as one of these object types (in block 304) by setting a bit in the object index for the primitive to indicate that it is a line-triangle or point-triangle and the degenerate flag distinguishes those primitives from other primitives which do not have conservative rasterization enabled but which may be line-triangles or point-triangles. As described above, depending upon the software configuration, the degenerate primitives may or may not have been culled in the cull unit 109.

Additionally, the ISP FPU 116 applies a depth bias to the identified degenerate primitives (block 306). Depth bias is a technique that makes coplanar polygons look like they are not coplanar. Depth bias is applied by adding a depth bias value to the C coefficient of the plane equation of the polygon (which has the format $Ax + By + C = z$), which shifts the plane along the z-axis. Depth bias can only be applied to triangles and so by classifying the post-snapped degenerate primitives as either a line-triangle or a point-triangle (in block 306), then a depth bias can be applied in the same way as for non-degenerate primitives. This may, for example, avoid depth fighting for line-triangles. Depth fighting, which may also be referred to as z-fighting or planefighting, refers to a visual artifact that is caused by the line-triangles having very similar depths and so there is some ambiguity about which is closer to the camera.

The TSP FPU 122 also detects degenerates (block 308) and selects a different interpolation mode for the primitive in response to the detection. For non-degenerate primitives ('No' in block 308), linear or perspective interpolation of varyings may be used (block 310); however, for degenerate primitives ('Yes' in block 308), flat interpolation of varyings is used (block 312), i.e. the attributes of the provoking vertex of the primitive are used (where the provoking vertex may be determined based on the particular operating mode or implementation). This reduces the amount of processing that is performed when handling degenerates and improves the overall efficiency of hardware when conservative rasterization is enabled. Whilst flat interpolation is used for both degenerate line triangles and degenerate point triangles (in block 312), the resulting primitives are drawn differently and hence different classifications are used.

An improved method of performing tiling where conservative rasterization is enabled, can be described with reference to Figures 4-6. As described above, performing tiling means determining, for each tile, which primitives overlap that tile and hence should be included in the display list for the tile. This method is implemented by the TE 114 and may be used in combination with the methods shown in Figures 2A-G and 3A-B and described above (e.g. in block 210) or independently of the methods shown in Figures 2A-G and 3A-B.

When performing tiling for a primitive with conservative rasterization enabled (also referred to as a conservative primitive), a safety margin is applied to compensate for the maximum quantization error that can be introduced when vertex coordinates are converted from floating point format to fixed point format. Where .8 fixed-point values are used, the maximum quantization error, QE, is $1/512^{th}$ of a pixel and hence a safety margin of twice that, i.e. $1/256^{th}$ of a pixel may be used. The safety margin may be referred to as the conservative margin, CM, and is twice the maximum quantization error, QE, i.e. CM=2QE. In the examples described below, the test point is moved by the safety margin; however, it will be appreciated that this is mathematically equivalent to moving the edge equation and not the test point, and so the method may instead move the edge equations.

As described above, perfect tiling involves comparing the edge equations of a primitive with the integer tile boundaries to check if the corner of the tile is inside the primitive (and hence whether the primitive should be included in the display list for the tile). In perfect tiling, there is no comparison of sample points within a pixel and the assessment is performed at the corner of the tile boundaries. Using the methods described herein, however, a single test point is used for each edge (one of the corners of the tile) depending on the orientation (i.e. gradient) of the particular edge. The orientation of each edge of the primitive may be determined by comparing the sign of dx and dy coordinates for the vertices that form the ends of the edge, where the vertices are denoted v0 (x0,y0) and v1 (x1,y1), with dx=x1-x0 and dy=y1-y0.

Figure 4 shows a table of the test point 402 for different edge orientations, shown graphically 404 and in terms of the signs of dx and dy 406, for both clockwise (CW) triangles and anticlockwise (ACW) triangles. As shown in Figure 4, if both dx and dy are positive, then the bottom left tile corner is used for a clockwise triangle and the top right tile corner is used for an anticlockwise triangle. Moving the test point in this way is equivalent to moving the edges in the opposite directions and so the hardware may be more efficiently implemented by shifting the X and Y values input into edge equations dependent upon the gradient of the edge (e.g. based on the signs of dx and dy) and only testing against the top left corner of a tile. Given an edge equation for a clockwise triangle of Ax + By + C and a tile of width TILE_WIDTH and height TILE_HEIGHT, Figure 4 also shows these shifts 408 in X and Y values for a conservative triangle. As shown in Figure 4, these shifts 408 include the conservative margin described above.

Given the edge equation above, and a clockwise triangle, the condition that for the test point x,y to be inside the primitive is:

$$Ax + By + C \geq 0 \text{ (equation 1)}$$

where:

$$A = -dy = y0-y1$$

$$B = dx = x1-x0$$

$$C = - (A*x0 + B*y0)$$

Substituting in the shift values from the table of Figure 4, where the shift in X value is denoted TILE_SHIFT_X and the shift in Y value is denoted TILE_SHIFT_Y, this becomes:

$$A * (x + TILE\_SHIFT\_X – x0) \geq -B * (y + TILE\_SHIFT\_Y – y0) \text{ (equation 2)}$$

Implementation of equation 2 above requires 4 ADD, 2 MUL and 1 CMP operation per tile that is tested. This may be optimised to be:

$$A * x + EDGE\_SHIFT\_PLUS\_C \geq -B * y \text{ (equation 3)}$$

where

$$EDGE\_SHIFT\_PLUS\_C = (A * TILE\_SHIFT\_X) + (B * TILE\_SHIFT\_Y) + C \text{ (equation 4)}$$

The value of EDGE_SHIFT_PLUS_C can be calculated using equation 4 once per edge and then stored and used multiple times, instead of modifying the test point for each test point (e.g. once per tile). This results in more efficient hardware (e.g. the number of ADDs is reduced as equation 3 only requires 1 ADD, 2 MUL and 1 CMP operation per tile).

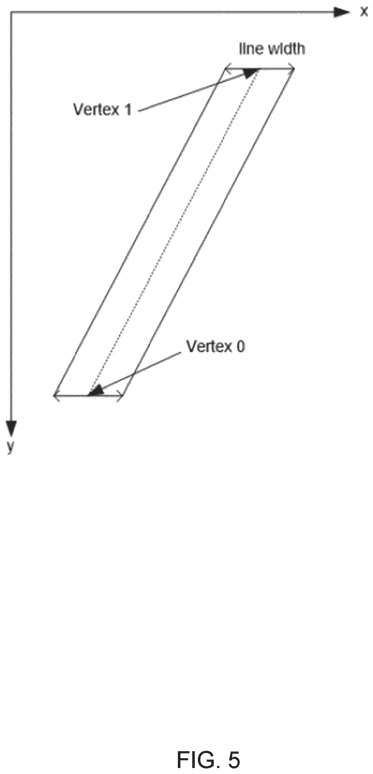

Lines and points may be handled in a similar manner to triangles, except that for lines only two edges are considered - each edge being parallel to the main axis of the line, defined by the two vertices of the line, as shown in Figure 5. The two edges are produced from the main axis edge by appending half the line width (denoted 'width') to the 'shift value in X' and 'shift value in Y' values as shown in the final columns 410 in the table of Figure 4. The line width is a property of the line primitive.

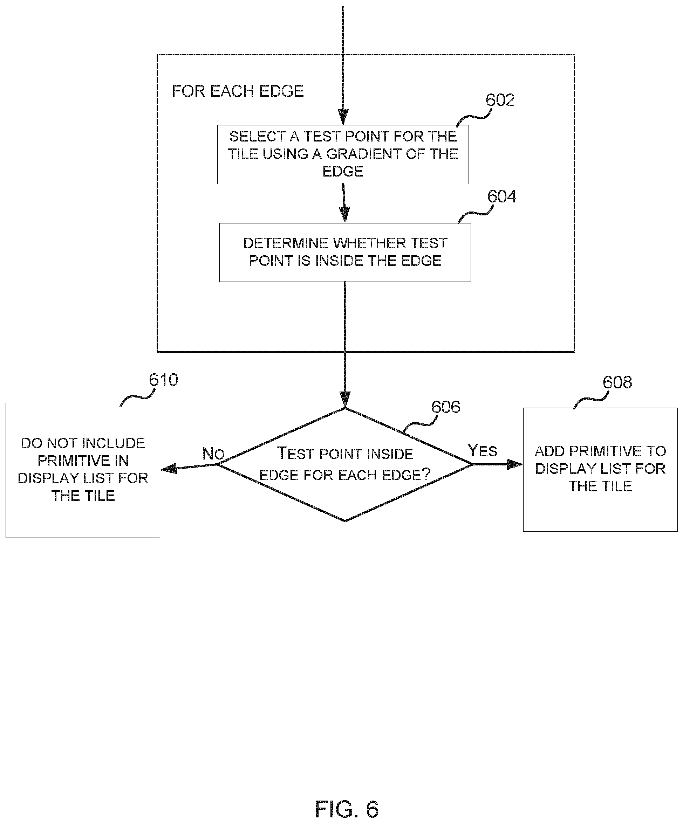

The tiling method is shown in the flow diagram of Figure 6. For each edge of a primitive, be that a triangle or line, a test point is selected using the gradient of the edge (block 602) and it is then determined whether the test point is inside the edge (block 604). This may be implemented using equation 2 or 3 above, and either the edge or the test point may be shifted by the conservative margin. As described above, the conservative margin, CM, is twice the maximum quantization error, QE, introduced by conversion of vertex coordinates from floating-point format to fixed point format. If, for each edge of the primitive, the test point for that edge is inside the primitive ('Yes' in block 606), the primitive is added to the display list for the tile (block 608); however, if the test point is outside any of the edges ('No' in block 606), the primitive is not added to the display list for the tile.

The method of Figure 6 may be repeated for each non-degenerate primitive and each tile. As described above with reference to Figure 2C, a different tiling method may be used for post-snapped degenerate primitives. As described above, the edge calculation to determine if the test point is inside an edge (in block 604) may use a calculated value of EDGE_SHIFT_PLUS_C which may be calculated once per edge and stored.

As described above, the ISP 118, and in particular the microtile processor 126, performs the tests for outer and inner pixel coverage as required for conservative rasterization and generates outer coverage and inner coverage masks. In order to reduce the amount of processing that is required by the microtile processor 126, the coefficient tracker 124 (in the ISP 118) may identify those microtiles within a tile which do not overlap in any way with a primitive (which may be referred to as 'empty microtiles') and those microtiles within a tile which may at least partially overlap with the primitive (which may be referred to as 'occupied microtiles'). The conservative bounding box for the primitive may also be used to identify empty microtiles (e.g. any microtile that does not overlap with the conservative bounding box may be marked as empty). It will be appreciated that there cannot be any false negatives (i.e. all empty microtiles must be truly empty), but there may be false positives (i.e. some microtiles marked as occupied may actually be empty). The entries in the outer and inner coverage masks for pixels in the identified empty microtiles can then be set to zero to indicate neither inner nor outer coverage and need not be considered further in relation to the particular primitive. The microtile processor 126 need only analyse the remaining, occupied microtiles to determine which pixels within a tile meet the outer and inner coverage tests and hence fully populate the outer and inner coverage masks.

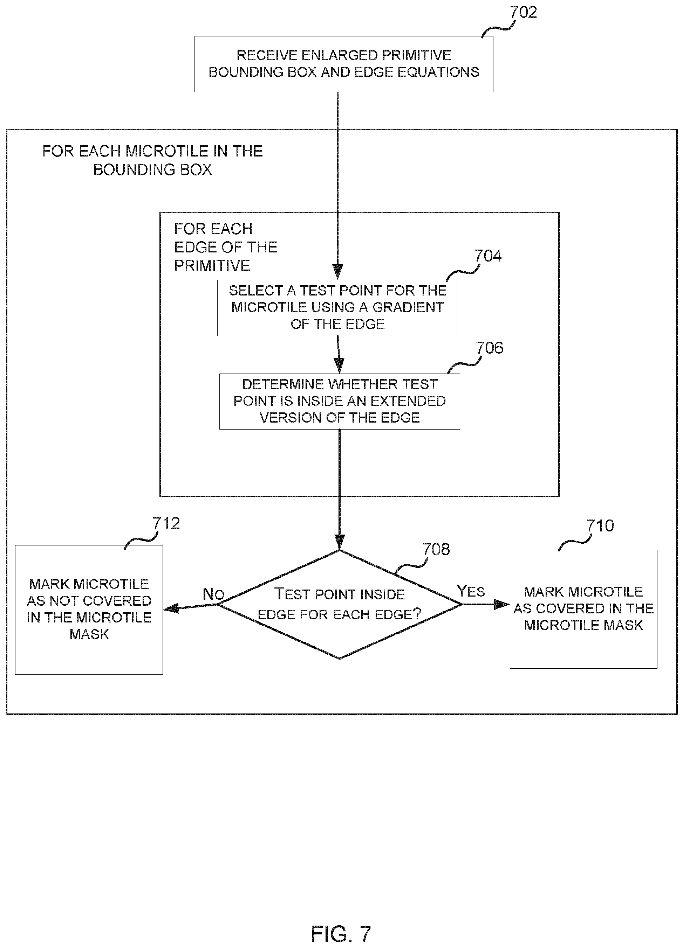

An improved method of determining microtile coverage (and hence identifying empty microtiles) can be described with reference to Figures 7-9. This method is implemented by the coefficient tracker 124 and may be used in combination with, or independently of, any one or more of the methods described above.

As shown in Figure 7, the coefficient tracker 124 receives an enlarged bounding box for a primitive along with the edge equations for the primitive (block 702). The enlarged bounding box may be generated by the ISP FPU 116 and corresponds to the bounding box for the primitive enlarged by the conservative margin, CM, and may be referred to as the conservative bounding box, as described above. The edge equations that are received, however, have not been modified to take conservative rasterization into account. The method is then performed for each microtile that overlaps with the enlarged bounding box to determine whether to mark the microtile as occupied (block 710) or empty (block 712). The microtile coverage may be recorded in a microtile mask or other format, with empty microtiles being marked as not covered and occupied microtiles being marked as covered.

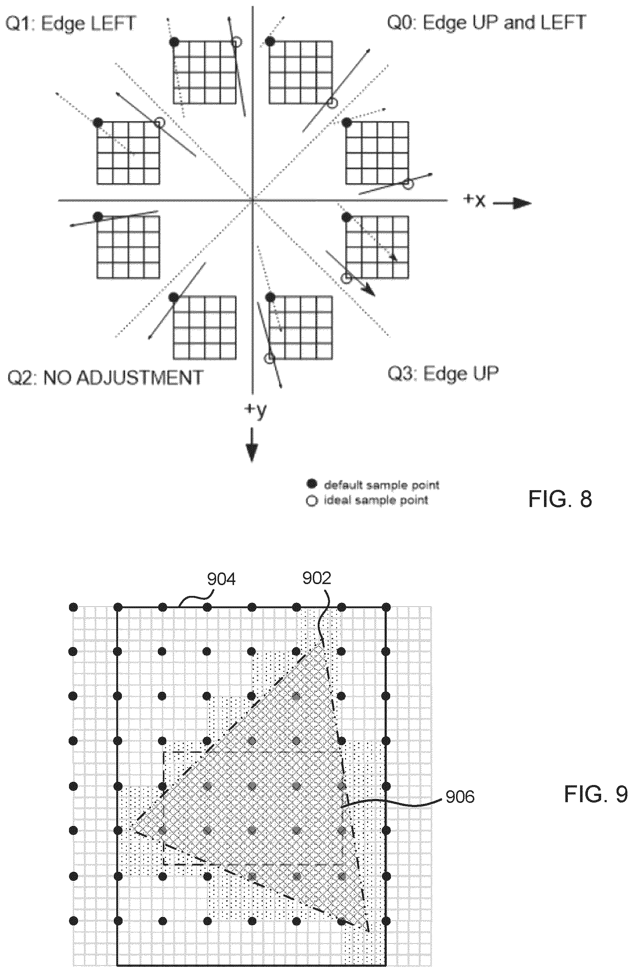

When considering a microtile, and for each edge of a primitive, be that a triangle or line, a test point for the microtile is selected using the gradient of the edge (block 704) and it is then determined whether the test point is inside an extended version of the edge (block 706). The selection of the test point (in block 704) is shown in the table below and in Figure 8.

**Table 1:**

| A | B | Quadrant | Edge vector direction | Test point location |
|---|---|---|---|---|
| + | + | Q0 | Up right | Bottom right |
| + | - | Q1 | Up left | Top right |
| - | - | Q2 | Down left | Top left |
| - | + | Q3 | Down right | Bottom left |

Given a default test point of the top left of each microtile (shown by the solid circles in Figure 8), the test position is not adjusted for Q2 but is adjusted for each other quadrant (with the selected test point being shown by open circles in Figure 8).

Using the selected test points (from block 704), some false positives could occur; however, the use of the shifted test points in combination with the primitive bounding box, eliminates these and avoids false positives in the resultant microtile mask (as generated in blocks 710 and 712).

The extended version of the edge that is used in the test (in block 706) includes an uncertainty margin which is dependent on the gradient of the edge. Given an edge equation of the format Ax + By + C, an edge is extended by an uncertainty margin given by the following equation:

$$(|A| + |B|) * QE$$

where QE is the maximum quantization error (e.g. QE = 1/512). Using this uncertainty margin:

- when A is positive, the margin is added to the x variable, which moves the edge to the left by A*QE units
- when A is negative, the margin is subtracted from the x variable, which moves the edge to the right by A*QE units
- when B is positive, the margin is added to the y variable, which moves the edge upwards by B*QE units
- when B is negative, the margin is subtracted from the y variable, which moves the edge downwards by B*QE units

Implementing this uncertainty margin, a different equation may be used to determine whether the test point is inside the edge, dependent upon the sign of A and B as shown in the table below:

**Table 2:**

| A | B | Equation |
|---|---|---|
| + | + | A * (x + QE) + B * (y + QE) + C $\geq$ 0 |
| + | - | A * (x + QE) + B * (y - QE) + C $\geq$ 0 |
| - | + | A * (x - QE) + B * (y + QE) + C $\geq$ 0 |
| - | - | A * (x - QE) + B * (y - QE) + C $\geq$ 0 |

Alternatively, these may be combined into a single equation (equation 5):

$$A * x + B * y + C + (|A| + |B|) * QE \geq 0$$

By using this single equation, the processing is simplified because it is not necessary to check the signs of A and B and then select the appropriate equation to use from the table above.

If, for each edge of the primitive, the test point for that edge is inside the primitive ('Yes' in block 708), the microtile is marked as covered by the primitive (block 710); however, if the test point is outside any of the edges ('No' in block 708), the microtile is marked as not being covered by the primitive.

An example of the output of the method of Figure 7 is shown in Figure 9 for an example primitive 902. As shown in Figure 9, if only the primitive bounding box 904 was used, there would be 48 microtiles marked as covered by the primitive; however, by using the method of Figure 7, in combination with using both a conservative bounding box for the primitive and a second type of bounding box 906 (referred to as the scissor bounding box) to identify empty microtiles (as described above), this is reduced to only 28 microtiles (shown shaded in Figure 9). This therefore reduces significantly the amount of processing that is subsequently performed by the microtile processor 126. The scissor bounding box 906 is an axis aligned bounding box at sample granularity which is generated outside of the coefficient tracker 123 and received and used by the coefficient tracker 124.

The microtile mask for the example shown in Figure 9 is shown below, with the microtile rows being read out in order, from right to left of each row and from top to bottom of the tile:

0010 0000

0011 0000

0011 1000

0111 1100

0111 1110

0111 1110

0111 1000

0100 0000

It will be appreciated that the equations described above in relation to the method of Figure 7 are for clockwise primitives. For anticlockwise primitives, the equations may be modified in the same way as the conditions 412 are modified in the table of Figure 4. Furthermore, whilst the method of Figure 7 and the equations above describe the shifting of the edge equations (referred to as the 'extended version of the edge' in block 706) to account for the quantization error (e.g. to shift by QE), in other examples the test points may instead be shifted (e.g. by determining whether the shifted test point is inside the original version of the edge, in an alternative to block 706).

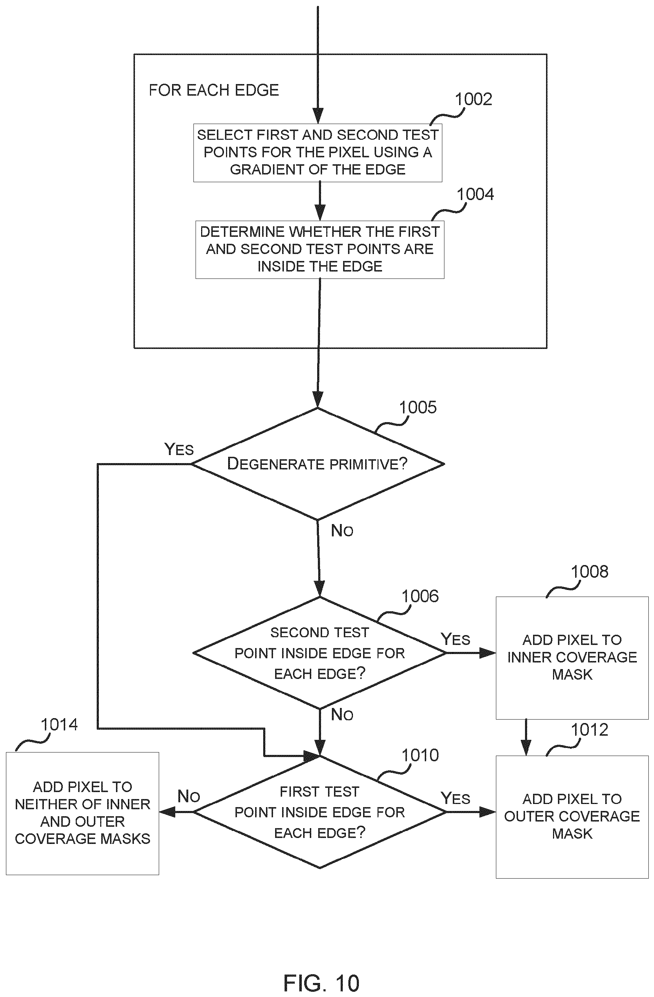

An improved method of determining outer and inner pixel coverage can be described with reference to Figure 10. This method is implemented by the microtile processor 126 and may be used in combination with, or independently of, any one or more of the methods described above.

The method of Figure 10 is implemented for each primitive and for a given primitive, for each pixel within a microtile. The method of Figure 10 may be implemented for each pixel within a tile or for only those pixels within an occupied microtile as identified by the coefficient tracker 124 (e.g. as described above with reference to Figures 7 and 9).

For pixel and for each edge of a non-degenerate primitive, the method comprises selecting a first and a second test point for the pixel using the gradient of the edge. The first test point is used for outer coverage determination and the second test point is used for inner coverage determination. As described above in relation to the earlier examples, where conservative rasterization is used, either the edge equations or the selected sample position may be offset (e.g. by QE), and in the example described below, it is the sample position that is offset (e.g. by QE).

The first test point (for outer coverage) may be selected in a similar manner to the test point for microtile determination (as shown in table 1 above and in Figure 8). The table below shows the same selection criteria but also includes the offsets applied to the test point to account for conservative rasterization. These offsets could also be used in the microtile determination method described above (with reference to Figure 7) instead of modifying the edge equations.

**Table 3:**

| A | B | Quadrant | Edge vector direction | First test point location | Test point offset, x | Test point offset, y |
|---|---|---|---|---|---|---|
| + | + | Q0 | Up right | Bottom right | +QE | +QE |
| + | - | Q1 | Up left | Top right | +QE | -QE |
| - | - | Q2 | Down left | Top left | -QE | -QE |
| - | + | Q3 | Down right | Bottom left | -QE | +QE |

The second test point (for inner coverage) is the opposite side of the pixel to the first test point, as shown in table below.

**Table 4:**

| A | B | Quadrant | Edge vector direction | Second test point location | Test point offset, x | Test point offset, y |
|---|---|---|---|---|---|---|
| + | + | Q0 | Up right | Top left | -QE | -QE |
| + | - | Q1 | Up left | Bottom left | -QE | +QE |
| - | - | Q2 | Down left | Bottom right | +QE | +QE |
| - | + | Q3 | Down right | Top right | +QE | -QE |

As shown in Figure 10, for non-degenerate primitives ('No' in block 1005), a pixel is added to the inner coverage mask (block 1008) if the second test point is inside each of the edges of the primitive ('Yes' in block 1006). Where the primitive is degenerate ('Yes' in block 1005), the inner coverage for all pixels is zero (i.e. no pixels are added to the inner coverage mask). For all primitives, a pixel is added to the outer coverage mask (block 1012) if the first test point is inside each of the edges of the primitive ('Yes' in block 1010). If the first test point is outside at least one of the edges ('No' in block 1010), then the pixel is not added to either of the inner or outer coverage masks (block 1014), i.e. both inner coverage and outer coverage are zero. As shown in Figure 10, if the pixel is added to the inner coverage mask (in block 1008) it is also added to the outer coverage mask (in block 1012) and the further determination (in block 1010) can be omitted.

In a similar manner to the method of Figure 7 described above, using the selected test points (from block 1002), some false positives could occur for outer coverage; however, the application of a filter of the outer coverage using the conservative primitive bounding box (e.g. at the input to the method of Figure 10) avoids false positives in the resultant outer coverage mask.

The ISP 118 may perform early depth testing where conservative rasterization is enabled and this may modify the outer coverage masks (e.g. as generated using the method of Figure 10). Early depth testing comprises testing each sample within a pixel (e.g. for each pixel that is in the outer coverage mask for the primitive) and interpolating a depth value per sample. All samples within a pixel are considered covered by the primitive, which may not be true for pixels that are only partially covered by a primitive, so when performing early depth testing, extrapolation rather than interpolation is performed for any sample position that is not actually covered by the primitive. This extrapolation can cause visual artifacts; however, use of early depth testing when conservative rasterization is enabled can significantly reduce the amount of processing performed later in the rasterization phase (by reducing the number of samples that are processed). The artifacts may be reduced by limiting the value of the extrapolated depth value to the minimum or maximum depth value for the primitive. In a variation on this, the inner coverage mask may be used to determine for which pixels the results of the early depth testing do not need to be clamped so that the fall within a range from the minimum depth value to the maximum depth value for the primitive (i.e. such that the values are only clamped for pixels in the outer coverage mask but not the inner coverage mask).

The depth values that are determined are then used to determine a coverage mask for the pixel (where here the term 'coverage' refers to whether the sample is visible or not, which is different to the use of the term in relation to inner and outer coverage and the coverage mask may alternatively be referred to as the sample mask). The coverage mask indicates which samples in the pixel are visible (coverage mask = 1) and which are not visible because they are behind another primitive and hence are hidden from view (coverage mask = 0). Where conservative rasterization is used, all samples within a pixel are considered initially visible if the pixel is outer covered; however, the number of samples that need to be handled by later parts of the graphics pipeline can be reduced by ANDing the result of the early depth test with the outer coverage mask. If the coverage mask of a pixel is all zeros after the depth test, the outer and the inner coverage mask for that pixel is also set to zero. This culls completely hidden pixels.

The ISP 118 may comprise a buffer (not shown in Figure 1) that stores information per sample. This information comprises one bit per sample for the sample mask / outer coverage mask (where this bit is used for the sample mask where conservative rasterization is not used and is used for the outer coverage mask where conservative rasterization is used) and additionally comprises one bit per sample for the inner coverage mask. By including an inner coverage bit per sample, it enables accumulation of samples in the buffer when inner coverage is requested. This reduces the amount of processing that is performed as it reduces the number of transactions sent from the buffer (and hence from the ISP 118) to subsequent stages in the pipeline (e.g. based on the inner coverage mask values). In contrast, if the inner coverage mask was not stored in the buffer, where inner coverage is requested, no reduction in transactions is possible and the inner coverage is instead handled later in the pipeline.

Having generated the inner coverage mask (using the method of Figure 10), special registers may be used to enable the fragment shader to access the inner coverage data.

Using the methods described above, the hardware that performs conservative rasterization within a GPU is more efficient. Furthermore, various of the methods described above reduce the number of fragments that are processed within the graphics pipeline and this reduces the overall power consumption of the GPU. As described above, a shift by the conservative margin, CM, is used when performing tiling and at other stages, a shift by the maximum quantization error, QE, is used.

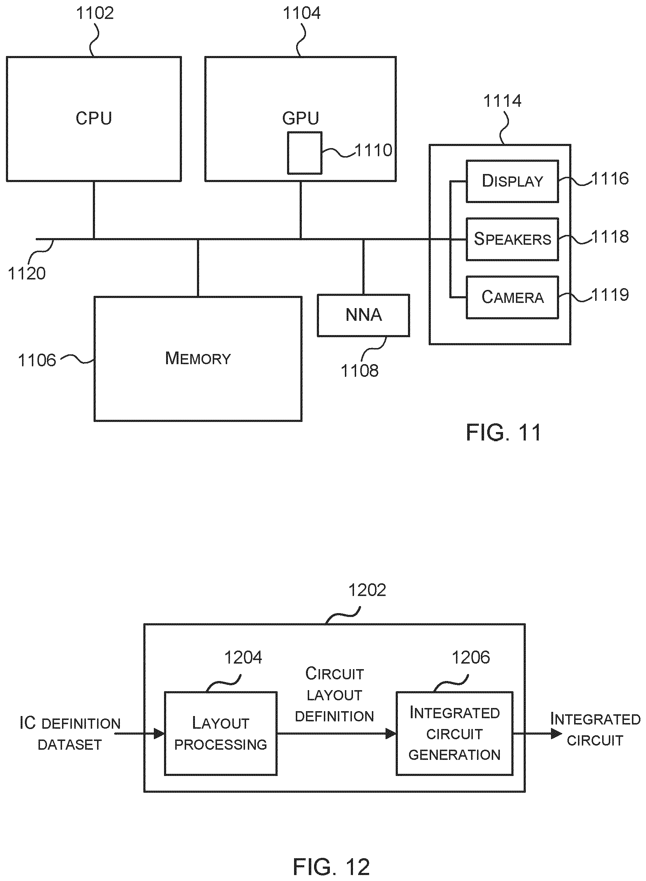

Figure 11 shows a computer system in which the graphics processing systems described herein may be implemented. The computer system comprises a CPU 1102, a GPU 1104, a memory 1106, a neural network accelerator (NNA) 1108 and other devices 1114, such as a display 1116, speakers 1118 and a camera 1199. The improved conservative rasterization hardware described above 1110 may be implemented within the GPU 1104. In other examples, one or more of the depicted components may be omitted from the system. The components of the computer system can communicate with each other via a communications bus 1120.

The graphics pipeline of Figure 1 is shown as comprising a number of functional blocks. This is schematic only and is not intended to define a strict division between different logic elements of such entities. Each functional block may be provided in any suitable manner. It is to be understood that intermediate values described herein as being formed by a particular block need not be physically generated by the pipeline at any point and may merely represent logical values which conveniently describe the processing performed by the pipeline between its input and output.

The graphics pipeline described herein may be embodied in hardware on an integrated circuit. The graphics pipeline described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a graphics pipeline configured to perform any of the methods described herein, or to manufacture a graphics pipeline comprising any apparatus described herein. An integrated circuit definition dataset may be, for example, an integrated circuit description.

Therefore, there may be provided a method of manufacturing, at an integrated circuit manufacturing system, a graphics pipeline as described herein. Furthermore, there may be provided an integrated circuit definition dataset that, when processed in an integrated circuit manufacturing system, causes the method of manufacturing a graphics pipeline to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a graphics pipeline will now be described with respect to Figure 12.

Figure 12 shows an example of an integrated circuit (IC) manufacturing system 1202 which is configured to manufacture a graphics pipeline as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a graphics pipeline as described in any of the examples herein), process the IC definition dataset, and generate an IC according to the IC definition dataset (e.g. which embodies a graphics pipeline as described in any of the examples herein). The processing of the IC definition dataset configures the IC manufacturing system 1202 to manufacture an integrated circuit embodying a graphics pipeline as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art.

For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a graphics pipeline without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A method of operation of a graphics pipeline (100) arranged to render primitives in a rendering space, wherein the rendering space is sub-divided into a plurality of tiles, the method comprising:

   Converting vertex coordinates for a plurality of primitives from floating-point format to fixed point format;
   Identifying (i) any triangle primitives having non-zero area prior to conversion of vertex coordinates and zero area after conversion of vertex coordinates and (ii) any primitives that have changed from line primitives to point primitives as a consequence of the conversion of vertex coordinates (204);
   Setting a flag for each identified primitive, the flag identifying the primitive as a degenerate primitive and marking any triangle or line primitives that have changed to point primitives as a consequence of the conversion of the vertex coordinates as small objects (206, 207); and
Generating tile lists for each tile by:

for any primitive that is not flagged as a degenerate primitive, using one or more edge calculations to determine whether the primitive overlaps a tile (210); and
for any primitive that is both marked as a small object and flagged as a degenerate primitive, using a conservative bounding box to determine whether the primitive overlaps a tile (209, 212).

2. The method of claim 1, further comprising, when setting a flag for each identified primitive, marking each identified primitive as a small object.

3. The method of any of the preceding claims, further comprising:
Culling one or more primitives prior to converting the vertex coordinates, wherein primitives marked as small objects are not culled (202).

4. The method of any of the preceding claims, further comprising:

For any primitive that is flagged as a degenerate primitive (302), classifying the degenerate primitive as either a line-triangle or a point-triangle (304); and
Applying depth bias to each triangle primitive including the degenerate primitives (306).

5. The method of any of the preceding claims, further comprising, for any primitive that is flagged as a degenerate primitive (308), using flat interpolation of varying data.

6. A graphics pipeline (100) arranged to render primitives in a rendering space, wherein the rendering space is sub-divided into a plurality of tiles and each tile is sub-divided into a plurality of microtiles, the graphics pipeline comprising:

a tiling engine (114) arranged to:
generate tile lists for each tile by, for each primitive:

For each edge, selecting a test point for the tile using a gradient of the edge (602) and determining whether the test point is inside the edge by evaluating an equation for the edge using the coordinates of the test point (604), wherein either the edge equation or the test point is shifted by a distance equal to a first multiple of a quantization error introduced by conversion of vertex coordinates from floating-point format to fixed point format; and
Adding the primitive to the tile list for the tile (608) in response to determining that, for each edge of the primitive, the test point is inside the edge (606) and

a coefficient tracker (124) arranged, for each primitive in a tile list for a tile, to determine whether a microtile is covered by a primitive by, for each primitive:

For each edge, selecting a test point for the microtile using a gradient of the edge (702) and determining whether the test point is inside the edge by evaluating an equation for the edge using the coordinates of the test point (706), wherein either the test point or the equation for the edge is shifted by a distance equal to a second multiple of the quantization error; and
Determining that the microtile is covered if (710), for each edge of the primitive, the test point is inside the edge (708).

7. The graphics pipeline according to claim 6, wherein the coefficient tracker is further arranged to receive an enlarged bounding box for the primitive, wherein the bounding box has been enlarged using the quantization error (702), and wherein the determination of whether a microtile is covered by a primitive is performed for each microtile in the enlarged bounding box.

8. The graphics pipeline according to claim 6 or 7, further comprising a microtile processor (126) arranged to determine outer and inner pixel coverage for the primitive by, for each pixel in a pre-defined area, wherein the pre-defined area is defined by a bounding box around the primitive or the microtiles covered by the primitive:

Selecting a first test point for outer coverage and a second test point for inner coverage using a gradient of the edge (1002) and determining whether each test point is inside the edge by evaluating an equation for the edge using the coordinates of the test point (1004), wherein the test points or the edge equation is shifted by an offset calculated using the quantization error, wherein different offsets are used for outer and inner coverage determinations;

Determining inner coverage of a pixel if, for each edge of the primitive, the second test point is on a right side of the edge (1006); and

Determining outer coverage of a pixel if, for each edge of the primitive, the first test point is inside the edge (1010).

9. The graphics pipeline according to claim 8, wherein the microtile processor is further arranged to:

Determine whether the primitive is a degenerate primitive (1005); and

In response to determining that the primitive is a degenerate primitive, omit the determination of inner coverage for all pixels.

10. The graphics pipeline according to claim 8 or 9, wherein the microtile processor is further arranged to:

In response to determining inner coverage of a pixel, add the pixel to an inner coverage mask for the primitive; and

In response to determining outer coverage of a pixel, add the pixel to an outer coverage mask for the primitive.

11. The graphics pipeline of any of claims 6-10, wherein the graphics pipeline is embodied in hardware on an integrated circuit.

12. A method of manufacturing, using an integrated circuit manufacturing system, a graphics pipeline as claimed in any of claims 6-10.

13. Computer readable code configured to cause the method of any of claims 1-5 to be performed when the code is run.

14. A computer readable storage medium having encoded thereon the computer readable code of claim 13.

15. An integrated circuit definition dataset that, when processed in an integrated circuit manufacturing system, configures the integrated circuit manufacturing system to manufacture a graphics pipeline as claimed in any of claims 6-10.

FIG. 1

DISABLE CULLING OF SMALL OBJECTS — 202

FIG. 2A

POST-SNAPPED DEGENERATE PRIMITIVE? — 204

No / Yes

FIG. 2B

MARK PRIMITIVE AS A SMALL OBJECT AND SET DEGENERATE FLAG — 206

USE TILING ALGORITHM TO DETERMINE WHETHER TO INCLUDE PRIMITIVE IN DISPLAY LIST FOR A TILE — 210

DEGENERATE FLAG SET? — 208

No / Yes

USE CONSERVATIVE BOUNDING BOX TO DETERMINE WHETHER TO INCLUDE PRIMITIVE IN DISPLAY LIST FOR A TILE — 212

FIG. 2C

224

1/256 OF A PIXEL

220

222

228

226

FIG. 2D

FIG. 2E

204
POST-SNAPPED DEGENERATE PRIMITIVE? → No

YES

205
POINT PRIMITIVE POST-SNAPPING? → No → 207 SET DEGENERATE FLAG

YES

206
MARK PRIMITIVE AS A SMALL OBJECT AND SET DEGENERATE FLAG

210
USE TILING ALGORITHM TO DETERMINE WHETHER TO INCLUDE PRIMITIVE IN DISPLAY LIST FOR A TILE

No ←

209
MARKED AS SMALL AND DEGENERATE FLAG SET?

→ YES

212
USE CONSERVATIVE BOUNDING BOX TO DETERMINE WHETHER TO INCLUDE PRIMITIVE IN DISPLAY LIST FOR A TILE

FIG. 2F

# EP 4 675 546 A1

**FIG. 2G**

MACROTILE 0    MACROTILE 1

TILE (0,0)   TILE (1,0)

234

230

222

220

232

TILE (7,7)

MACROTILE 2    MACROTILE 3

236

⬚ CONSERVATIVE PRIMITIVE VCE BOUNDING BOX

⌐ NON CONSERVATIVE PRIMITIVE VCE BOUNDING BOX

‐ CONSERVATIVE TILE VCE BOUNDING BOX

◺ PRIMITIVE IN 16.8 FIXED POINT

---

**FIG. 2H**

TILE (4,3)

220

230

222

234

⬚ CONSERVATIVE PRIMITIVE VCE BOUNDING BOX

⌐ NON CONSERVATIVE PRIMITIVE VCE BOUNDING BOX

◺ PRIMITIVE IN 16.8 FIXED POINT

---

TILE (3,3)    TILE (4,3)   220   1/256 OF A PIXEL

230

222

TILE (3,4)    TILE (4,4)

⬚ CONSERVATIVE PRIMITIVE VCE BOUNDING BOX

⌐ NON CONSERVATIVE PRIMITIVE VCE BOUNDING BOX

◺ PRIMITIVE IN 16.8 FIXED POINT

**FIG. 2I**

21

FIG. 3A

FIG. 3B

| Test Point | Triangle | Edge Orientation | Condition for test point on outside of edge (left CW, right ACW). | dx sign | dy sign | Conservative Triangle | | Conservative Line | |
|---|---|---|---|---|---|---|---|---|---|
| | | | | | | Shift Value in X | Shift Value in Y | Shift Value in X | Shift Value in Y |
| | CW | | y < mx + c | + | - | TILE_WIDTH + CM | TILE_HEIGHT + CM | TILE_WIDTH + width/2 + CM | TILE_HEIGHT + width/2 + CM |
| | CW | | y < mx + c | + | + | -CM | TILE_HEIGHT + CM | -width/2 - CM | TILE_HEIGHT + width/2 + CM |
| | CW | | y > mx + c | - | + | -CM | -CM | -width/2 - CM | -width/2 - CM |
| | CW | | y > mx + c | - | - | TILE_WIDTH + CM | -CM | TILE_WIDTH + width/2 + CM | -width/2 - CM |
| | ACW | | y > mx + c | + | - | -CM | -CM | -width/2 - CM | -width/2 - CM |
| | ACW | | y > mx + c | + | + | TILE_WIDTH + CM | -CM | TILE_WIDTH + width/2 + CM | -width/2 - CM |
| | ACW | | y < mx + c | - | + | TILE_WIDTH + CM | TILE_HEIGHT + CM | TILE_WIDTH + width/2 + CM | TILE_HEIGHT + width/2 + CM |
| | ACW | | y < mx + c | - | - | -CM | TILE_HEIGHT + CM | -width/2 - CM | TILE_HEIGHT + width/2 + CM |

FIG. 4

23

FIG. 5

FOR EACH EDGE

SELECT A TEST POINT FOR THE TILE USING A GRADIENT OF THE EDGE — 602

DETERMINE WHETHER TEST POINT IS INSIDE THE EDGE — 604

610 — DO NOT INCLUDE PRIMITIVE IN DISPLAY LIST FOR THE TILE

No ← TEST POINT INSIDE EDGE FOR EACH EDGE? — 606 → YES

ADD PRIMITIVE TO DISPLAY LIST FOR THE TILE — 608

FIG. 6

RECEIVE ENLARGED PRIMITIVE
BOUNDING BOX AND EDGE EQUATIONS — 702

FOR EACH MICROTILE IN THE
BOUNDING BOX

FOR EACH
EDGE OF THE
PRIMITIVE

SELECT A TEST POINT FOR THE
MICROTILE USING A GRADIENT
OF THE EDGE — 704

DETERMINE WHETHER TEST
POINT IS INSIDE AN EXTENDED
VERSION OF THE EDGE — 706

712 — MARK MICROTILE
AS NOT COVERED
IN THE MICROTILE
MASK

No — TEST POINT INSIDE
EDGE FOR EACH EDGE? — 708 — YES

710 — MARK MICROTILE
AS COVERED IN THE
MICROTILE MASK

FIG. 7

Q1: Edge LEFT

Q0: Edge UP and LEFT

+x →

Q2: NO ADJUSTMENT

Q3: Edge UP

+y

● default sample point
○ ideal sample point

FIG. 8

904    902

906

FIG. 9

FIG. 10

FIG. 11

FIG. 12

Europäisches
Patentamt

European
Patent Office

Office européen
des brevets

## EUROPEAN SEARCH REPORT

**Application Number**

EP 25 18 6128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 561 557 A (ADVANCED RISC MACH LTD [GB]) 24 October 2018 (2018-10-24) <br> * abstract * <br> * page 1, line 4 - line 6 * <br> * page 1, line 23 - line 34 * <br> * page 2, line 14 - line 20 * <br> * page 2, line 27 - page 3, line 5 * <br> * page 3, line 27 - page 4, line 27 * <br> * page 4, line 12 - line 17 * <br> * page 5, line 4 - line 11 * <br> * page 5, line 23 - page 6, line 2 * <br> * page 6, line 1 - line 9 * <br> * page 7 - page 9 * <br> * page 43, line 5 - line 17 * <br> ----- | 1-15 | INV. <br> G06T1/20 <br> G06T15/00 |
| A | US 2014/267238 A1 (LUM ERIC BRIAN [US] ET AL) 18 September 2014 (2014-09-18) <br> * abstract * <br> * paragraph [0002] - paragraph [0005] * <br> * paragraph [0006] * <br> * paragraph [0030] - paragraph [0035] * <br> * paragraph [0049] - paragraph [0054] * <br> ----- | 1-15 | |
| A | GB 2 549 789 A (IMAGINATION TECH LTD [GB]) 1 November 2017 (2017-11-01) <br> * abstract * <br> * paragraph [0002] * <br> * paragraph [0006] * <br> * paragraph [0043] * <br> * paragraph [0054] - paragraph [0056] * <br> ----- | 1-15 | **TECHNICAL FIELDS SEARCHED (IPC)** <br><br> G06T |
| A | US 2023/388651 A1 (LARSEN DANIEL FEDAI [NO] ET AL) 30 November 2023 (2023-11-30) <br> * paragraph [0002] - paragraph [0008] * <br> * paragraph [0043] - paragraph [0044] * <br> * paragraph [0217] - paragraph [0220] * <br> ----- <br> -/-- | 1-15 | |

The present search report has been drawn up for all claims

| Place of search | Date of completion of the search | Examiner |
|---|---|---|
| Munich | 6 October 2025 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 25 18 6128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/027533 A1 (RUUD OLE MAGNUS [NO] ET AL) 28 January 2021 (2021-01-28)<br>* paragraph [0001] - paragraph [0002] *<br>* paragraph [0014] - paragraph [0015] *<br>* paragraph [0061] *<br>* paragraph [0092] - paragraph [0094] *<br>* abstract * | 1-15 | |
| | ----- | | |
| | | | TECHNICAL FIELDS SEARCHED (IPC) |

The present search report has been drawn up for all claims

| Place of search | Date of completion of the search | Examiner |
|---|---|---|
| Munich | 6 October 2025 | Garton, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 18 6128

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | | Publication date | Patent family member(s) | | Publication date |
|---|---|---|---|---|---|
| GB 2561557 | A | 24-10-2018 | CN | 108734624 A | 02-11-2018 |
| | | | GB | 2561557 A | 24-10-2018 |
| | | | US | 2018300915 A1 | 18-10-2018 |
| US 2014267238 | A1 | 18-09-2014 | CN | 104050626 A | 17-09-2014 |
| | | | DE | 102013114090 A1 | 18-09-2014 |
| | | | TW | 201439968 A | 16-10-2014 |
| | | | US | 2014267238 A1 | 18-09-2014 |
| GB 2549789 | A | 01-11-2017 | NONE | | |
| US 2023388651 | A1 | 30-11-2023 | CN | 117596485 A | 23-02-2024 |
| | | | US | 2023388651 A1 | 30-11-2023 |
| | | | US | 2024064411 A1 | 22-02-2024 |
| | | | US | 2024406571 A1 | 05-12-2024 |
| US 2021027533 | A1 | 28-01-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2409486 A
- GB 2401522 A
- GB 2549789 A